# EUROPÄISCHE PATENTSCHRIFT

(11) **EP 2 328 455 B1**
(45) Veröffentlichungstag und Bekanntmachung des Hinweises auf die Patenterteilung: **10.04.2019**
(21) Anmeldenummer: 09781624.3
(22) Anmeldetag: 07.08.2009
(51) Int. Cl.: A47L 15/42, A47L 15/48

(54) **VERFAHREN ZUM BETREIBEN EINER GESCHIRRSPÜLMASCHINE**
METHOD FOR OPERATING A DISHWASHER
PROCÉDÉ DE FONCTIONNEMENT D'UN LAVE-VAISSELLE

(30) Priorität: 27.08.2008 DE 102008039888; 07.11.2008 DE 102008043554
(43) Veröffentlichungstag der Anmeldung: 08.06.2011
(73) Patentinhaber: BSH Hausgeräte GmbH, 81739 München (DE)
(72) Erfinder: FAUTH, Michael, 91785 Pleinfeld (DE); JERG, Helmut, 89537 Giengen (DE); PAINTNER, Kai, 86477 Adelsried (DE); REITER, Andreas, 89435 Finningen (DE); RIEGER, Roland, 73492 Rainau (DE)
(86) Internationale Anmeldenummer: PCT/EP2009/060290
(87) Internationale Veröffentlichungsnummer: WO 2010/023089

(56) Entgegenhaltungen:
- EP-A1- 0 365 500
- EP-A1- 0 761 157
- WO-A1-2010/012716
- DE-A1- 10 353 774
- DE-A1- 10 353 775
- DE-A1-102005 004 092
- DE-A1-102005 004 095

## Beschreibung

Die Erfindung betrifft ein Verfahren zum Betreiben einer Geschirrspülmaschine, insbesondere einer Haushalts-Geschirrspülmaschine nach dem Oberbegriff des Patentanspruchs 1.

Aus der DE 103 53 774 A1, der DE 103 53 775 A1, der DE 10 2005 004 092 A1 und der DE 10 2005 004 096 A1 sind Geschirrspülmaschinen mit sogenannten Sorptionstrocknungssystemen zur exothermen Trocknung von gereinigtem Spülgut bekannt. Dabei wird im einem Teilprogrammschritt "Trocknen" des jeweiligen Geschirrspülprogramms der Geschirrspülmaschine zum Trocknen von Spülgut mittels eines Lüfters feuchte Luft aus dem als Spülbehälter dienenden Innenraum der Geschirrspülmaschine durch einen Sorptionsbehälter geleitet und durch das im Sorptionsbehälter befindliche reversibel dehydrierbares Trocknungsmaterial Feuchtigkeit aus der hindurchgeführten Luft entzogen. Zur Regenerierung, d.h. Desorption des Trocknungsmaterials, wird das reversibel dehydrierbares Trocknungsmaterial auf sehr hohe Temperaturen erhitzt. In diesem Trocknungsmaterial gespeichertes Wasser tritt dadurch als heißer Wasserdampf aus und wird durch eine mittels des Lüfters erzeugte Luftströmung in den Spülbehälter geleitet. Hierdurch kann Flüssigkeit und/oder ein in dem Spülbehälter befindliches Geschirr sowie die im Spülbehälter befindliche Luft erwärmt werden. Ein derartiges Sorptionstrocknungssystem hat sich für eine energiesparende und leise Trocknung des Geschirrs als sehr vorteilhaft erwiesen. Jedoch kann sich eine Ausblasöffnung, durch die Luft mit der aus dem Trocknungsmaterial ausgetriebenen Flüssigkeit in den Innenraum eintritt, sehr stark erwärmen, insbesondere wenn aus dem Trocknungsmaterial Feuchtigkeit ausgetrieben wird, so dass die Ausblasöffnung eine Gefahrenquelle für eine Bedienperson darstellt.

Der Erfindung liegt die Aufgabe zugrunde, hier Abhilfe zu schaffen.

Die Erfindung geht aus von einem Verfahren zum Betreiben einer Geschirrspülmaschine, insbesondere einer Haushalts-Geschirrspülmaschine, bei dem wenigstens in einem Innenraum gelagertes Spülgut wenigstens zeitweise mit erwärmter Flüssigkeit beaufschlagt wird, wobei zum Erwärmen der Flüssigkeit Luft zuerst durch ein für exothermisches Trocknen geeignetes Trocknungsmaterial und dann die Luft mit aus dem Trocknungsmaterial ausgetriebener, erwärmter Flüssigkeit durch eine Ausblasöffnung, durch die Luft mit der aus dem Trocknungsmaterial ausgetriebenen Flüssigkeit in den Innenraum eintritt, geleitet wird.

Weiterhin ist vorgesehen, dass die Ausblasöffnung gekühlt wird. So wird zuverlässig verhindert, dass es zu einer übermäßigen Erhitzung der Ausblasöffnung kommt und somit eine erhitzte Ausblasöffnung keine Gefahrenquelle für Verbrennungen einer Bedienperson darstellt, wenn diese den Innenraum einer Geschirrspülmaschine öffnet, um z.B. damit den Ablauf eines Spülprogramm zu unterbrechen und Störungen, z.B. hervorgerufen durch Verstopfungen eines Filters oder Blockaden von Sprüharmen, zu beheben.

Gemäß einer Weiterbildung ist vorgesehen, dass zur Kühlung die Ausblasöffnung mit einem Kühlmittel, insbesondere mit einem Wasser enthaltenden Kühlmittel, benetzt wird. Somit wird auf besonders einfache Art und Weise eine Kühlung mit einem frei verfügbaren Kühlmittel erreicht, dessen Entsorgung zudem problemlos möglich ist.

In einer Weiterbildung ist vorgesehen, dass das Kühlmittel in einem geschlossenen Kreislauf umgewälzt wird. So wird der Kühlmittelbedarf auf ein Minimum reduziert.

Erfindungsgemäß ist zudem vorgesehen, dass das Kühlmittel mittels einer Umwälzpumpe zum Beaufschlagen von Spülgut mit Flüssigkeit umgewälzt wird. Somit sind keine weiteren Antriebsmittel erforderlich, was die Anzahl der Bauteile sowie den Bauraumbedarf der Gesamtanzahl der Bauteile der Geschirrspülmaschine nicht erhöht.

Ferner ist gemäß der Erfindung vorgesehen, dass die Umwälzpumpe mit einer geringeren Drehzahl betrieben wird, wenn die Ausblasöffnung gekühlt wird, als wenn Spülgut mit Flüssigkeit beaufschlagt wird. Bei Betrieb mit geringerer Drehzahl wird im Wesentlichen nur die Ausblasöffnung mit Flüssigkeit beaufschlagt und so eine besonders intensive Kühlung bewirkt.

In einer Weiterbildung ist vorgesehen, dass Luft aus dem Innenraum in einem geschlossenen Kreislauf durch das Trocknungsmaterial und wieder zurück durch die Ausblasöffnung in den Innenraum geleitet wird. Somit wird sichergestellt, dass keine Luft aus der Geschirrspülmaschine austritt und z.B. benachbarte Möbel beschädigen kann.

In einer weiteren Weiterbildung ist vorgesehen, dass das Trocknungsmaterial zwangsdurchströmt wird. Dies steigert die Effizienz beim Austreiben von Flüssigkeit aus dem Trocknungsmaterial.

Hierzu ist in einer Weiterbildung vorgesehen, dass mittels eines Lüfters die Zwangsdurchströmung bewirkt wird.

Hierzu ist in einer Weiterbildung vorgesehen, dass ein reversibel dehydrierbares Trocknungsmaterial, insbesondere Zeolith, verwendet wird. Dieses Trocknungsmaterial zeichnet sich durch ein besonders hohes Wasseraufnahmevermögen sowie durch eine besonders gute reversible Dehydrierbarkeit aus.

Ferner wird die Aufgabe der Erfindung gelöst durch eine Geschirrspülmaschine, insbesondere Haushalts-Geschirrspülmaschine, wenigstens aufweisend Mittel zum wenigstens zeitweisen Beaufschlagen von in einem Innenraum der Geschirrspülmaschine gelagertem Spülgut mit erwärmter Flüssigkeit, wobei zum Erwärmen der Flüssigkeit ein für exothermisches Trocknen geeignetes Trocknungsmaterial vorgesehen ist, durch das Luft hindurchleitbar und dann die Luft mit aus dem Trocknungsmaterial ausgetriebener, erwärmter Flüssigkeit in den Innenraum leitbar ist, wobei vorgesehen ist, dass eine Ausblasöffnung, durch die Luft mit der aus dem Trocknungsmaterial ausgetriebenen Flüssigkeit in den Innenraum eintreten kann, kühlbar ist, wenn die Luft mit der aus dem Trocknungsmaterial ausgetriebenen Flüssigkeit in den Innenraum eintritt. Ferner ist eine Umwälzpumpe zum Beaufschlagen von Spülgut mit Flüssigkeit vorgesehen, mit der Kühlmittel umwälzbar ist. Die Geschirrspülmaschine zeichnet sich schließlich dadurch aus, dass die Umwälzpumpe mit einer geringeren Drehzahl betreibbar ist, wenn die Ausblasöffnung gekühlt wird, als wenn Spülgut mit Flüssigkeit beaufschlagt wird.

Die Erfindung und ihre Weiterbildung werden nachfolgend anhand von Zeichnungen näher erläutert.

Es zeigen:
- Fig. 1: eine schematische Darstellung eines Ausführungsbeispiels einer erfindungsgemäßen Geschirrspülmaschine mit einem Sorptionstrocknungssystem,
- Fig. 2: eine schematische Darstellung des Temperaturverlaufs während eines ersten Ausführungsbeispiels eines erfindungsgemäßen Spülprogrammdurchlaufs,
- Fig. 3: eine schematische Darstellung des Temperaturverlaufs eines weiteren, zweiten Ausführungsbeispiels eines erfindungsgemäßen Spülprogrammdurchlaufs, und
- Fig. 4: eine schematische Darstellung des Temperaturverlaufs eines weiteren, dritten Ausführungsbeispiels eines erfindungsgemäßen Spülprogrammdurchlaufs.

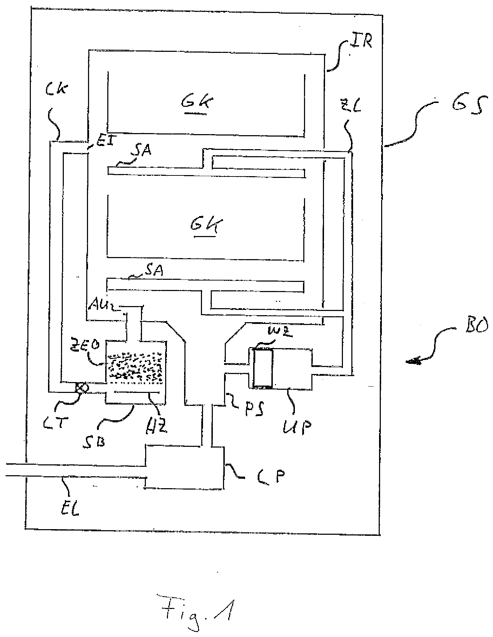

Es wird zunächst auf Figur 1 Bezug genommen.

Eine im vorliegenden Ausführungsbeispiel als Haushalts-Geschirrspülmaschine ausgebildete Geschirrspülmaschine GS weist einen als Spülbehälter dienenden Innenraum IR auf, der mittels einer an der Geschirrspülmaschine GS schwenkbar angelenkten Tür (nicht dargestellt) zum Beladen und Entladen geöffnet bzw. geschlossen werden kann. In dem Innenraum IR der Geschirrspülmaschine GS sind Geschirrkörbe GK zur Aufnahme von zu reinigendem Spülgut vorgesehen, die aus dem Innenraum IR der Geschirrspülmaschine GS herausgezogen werden können, um das Be- und Entladen zu erleichtern.

Um das in den Geschirrkörben GK gelagerte Spülgut zu reinigen, sind in dem Innenraum IR der Geschirrspülmaschine GS als Sprüharme SA ausgebildete Mittel zur Beaufschlagung von Spülgut mit Flüssigkeit vorgesehen, wobei es sich bei der Flüssigkeit um z.B. mit Reinigungsmitteln oder mit Klarspüler versetztes Wasser handeln kann, um so eine Reinigungswirkung bzw. streifenfreie Trocknung zu bewirken. Die vom Spülgut herabfließende Flüssigkeit sammelt sich in einem Pumpensumpf PS, der im Bodenbereich des Innenraumes IR der Geschirrspülmaschine GS angeordnet ist.

Die Sprüharme SA sind über eine Zuführleitung ZL mit einer Umwälzpumpe UP flüssigkeitsleitend verbunden, die neben anderen Bauteilkomponenten der Geschirrspülmaschine GS in einer Bodenbaugruppe BO unterhalb des Innenraums IR der Geschirrspülmaschine GS angeordnet ist. Im Betrieb, d.h. bei laufender Umwälzpumpe UP, saugt die Umwälzpumpe UP die sich in dem Pumpensumpf PS angesammelte Flüssigkeit an und fördert diese durch die Zuführleitung ZL zu den Sprüharmen SA. Um die durch den Betrieb der Umwälzpumpe UP umgewälzte Flüssigkeit zu erwärmen, weist die Umwälzpumpe eine integrierte Wasserheizung WZ zur Erwärmung der Flüssigkeit auf. Alternativ kann neben der Umwälzpumpe UP ein separater Durchlauferhitzer oder eine andere Wasserheizung vorgesehen sein. Zum Entleeren des Innenraums IR der Geschirrspülmaschine GS ist eine Laugenpumpe LP vorgesehen, die ebenfalls in flüssigkeitsleitender Verbindung mit dem Pumpensumpf PS steht und mit einer Entsorgungsleitung EL an ein hausseitiges Abwasserentsorgungsnetz angeschlossen werden kann.

Ferner weist die Geschirrspülmaschine GS ein Sorptionstrocknungssystem auf, mit dem in den Geschirrkörben GR angeordnetes und gereinigtes Spülgut am Ende eines Spülprogrammdurchlaufs getrocknet werden kann. Hierzu ist in der Bodenbaugruppe BO ein Sorptionsbehälter SB vorgesehen, der über einen Luftkanal LK mit einem Einlass EI luftleitend verbunden ist, wobei zur Erzeugung einer Zwangsdurchströmung ein Lüfter LT vorgesehen ist. Um die durch den Einlass EI angesaugte und durch den Lüfter LT in den Sorptionsbehälter beförderte Luft wieder in den Innenraum IR der Geschirrspülmaschine GS zurückzufördern, ist eine Ausblasöffnung AU im Bodenbereich des Innenraums IR der Geschirrspülmaschine GS vorgesehen.

Um eine Trocknung von gereinigtem Spülgut zu bewirken, wird durch den Lüfter LT Luft aus dem Innenraum IR der Geschirrspülmaschine GS angesaugt, durch den Sorptionsbehälter SB geleitet und wieder durch die Ausblasöffnung AU zurück in den Innenraum IR der Geschirrspülmaschine GS geleitet. Um hierbei die umgewälzte Luft zu trocknen, ist in dem Sorptionsbehälter SB ein Trocknungsmittel zur Durchführung einer exothermen Trocknung vorgesehen. Es handelt sich dabei um ein reversibel dehydrierbares Trocknungsmaterial, z.B. Zeolith, das auf Grund seiner hygroskopischen Eigenschaft Wasser aufnimmt, wobei zeitgleich Wärmeenergie freigesetzt wird. Durch diese freigesetzte Wärmeenergie wird eine Erwärmung der umgewälzten Luft bewirkt, was zugleich das Feuchtigkeitsaufnahmevermögen der umgewälzten Luft erhöht. Am Ende eines Trocknungsvorgangs ist eine Flüssigkeitsmenge in dem Trocknungsmaterial ZEO gespeichert.

Um das Aufnahmevermögen des Trocknungsmittels ZEO für einen erneuten Spülprogrammdurchlauf wieder herzustellen, ist eine Luftheizung HZ vorgesehen, die im vorliegenden Ausführungsbeispiel in dem Sorptionsbehälter SB angeordnet ist. Es ist jedoch auch möglich, eine Luftheizung außerhalb des Sorptionsbehälters SB anzuordnen, z.B. in dem Luftkanal LK, um eine Erwärmung der in den Sorptionsbehälter SB geförderten Luft zu bewirken. Um die in dem Trocknungsmaterial ZEO gespeicherte Flüssigkeitsmenge auszutreiben, wird eine mit dem Lüfter LT erzeugte Luftströmung erwärmt, so dass das Trocknungsmaterial ZEO auf Temperaturen erhitzt werden kann, bei denen die in dem Trocknungsmaterial ZEO gespeicherte Wassermenge wieder freigesetzt werden kann.

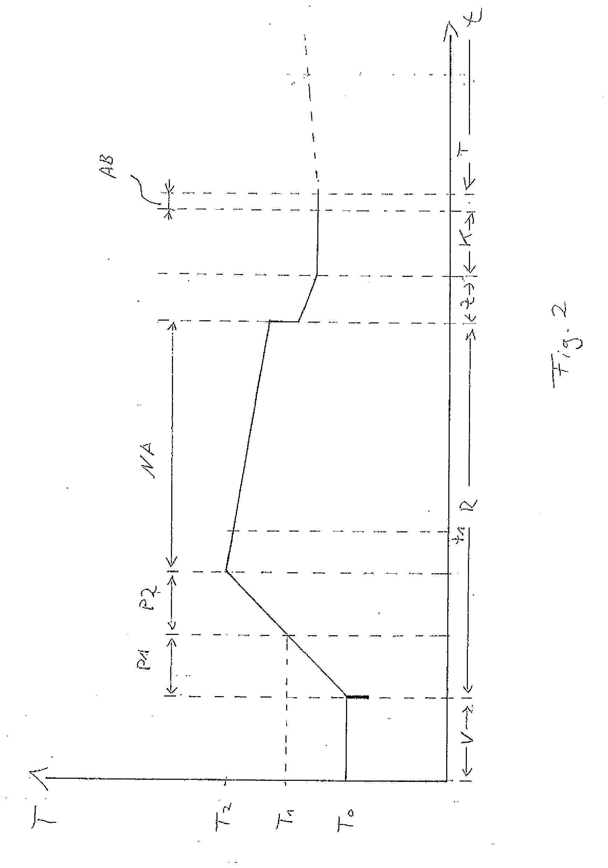

Es wird nun zusätzlich auf die Figuren 2 bis 4 Bezug genommen.

Geschirrspülmaschinen GS durchlaufen zur Reinigung und Trocknung von zu reinigendem Spülgut Spülprogramme, die aus einer Mehrzahl von Programmschritten bestehen, die nacheinander durchlaufen werden. Ein derartiges Programm kann aus den Programmschritten Vorspülen V, Reinigen R, Zwischenspülen Z, Klarspülen K und Trocknen T bestehen, wobei einzelne Programmschritte, wie z. B. das Vorspülen V oder Zwischenspülen Z auch ausgeblendet werden können, während es auch denkbar ist, einzelne Programmschritte mehrfach zu durchlaufen, wie z.B. das Zwischenspülen Z. Während des Vorspülens V wird bspw. Spülgut mit Wasser ohne Zugabe von Reinigungsmitteln beaufschlagt, wobei dies entweder mit nicht erwärmtem Wasser oder mit mittels einer Heizung erwärmtem Wasser durchgeführt wird. Hierzu kann Wasser verwendet werden, das in einem Wassertank (nicht dargestellt) gespeichert wurde. Ein derartiger Wassertank kann mit der Umgebung der Geschirrspülmaschine in wärmeleitender Verbindung stehen, so dass in dem Wassertank zwischengespeicherte Flüssigkeit, wie z.B. Wasser aus einem hausseitigen Versorgungssystem, sich auf Raumtemperatur erwärmen kann. In dem Reinigungsschritt R erfolgt eine Reinigung von Spülgut durch Beaufschlagung von mit Reinigungsmitteln versetztem Wasser, d.h. während des Reinigungsschritts erfolgt eine Reinigungsmittelzugabe. Ferner erfolgt eine Erwärmung der Flüssigkeit, um so die Reinigungswirkung des Reinigungsmittels zu steigern. Dabei setzt sich der Reinigungsschritt R aus einer Heizphase P1, P2, in der die Flüssigkeit in der Geschirrspülmaschine GS mittels Heizmitteln erwärmt wird, bis eine vorgegebene Maximaltemperatur erreicht ist, und einer anschließenden Nachwaschphase zusammen, während der bei ausgeschaltetem Heizungsmittel die sich langsam abkühlende Flüssigkeit mittels der Umwälzpumpe UP umgewälzt wird. In dem Programmschritt Zwischenspülen Z wird das Spülgut mit Flüssigkeit beaufschlagt, um so Schmutzreste aus der Geschirrspülmaschine GS zu fördern. Der nächste Programmschritt ist das Klarspülen K zur Vorbereitung des Programmschritts Trocknen T, bei dem mit Klarspülmittel versetztes Wasser mittels der Umwälzpumpe umgewälzt und über die Sprüharme SA auf das nun gereinigte Spülgut aufgebracht wird. Abschließend erfolgt der Programmschritt Trocknen T, in dem das Spülgut nicht mehr mit Flüssigkeit beaufschlagt wird, sondern durch Betrieb des Lüfters LT eine durch den Innenraum IR der Geschirrspülmaschine GS und dem Sorptionsbehälter SB zirkulierende Luftströmung erzeugt wird. Zwischen den einzelnen Programmschritten kann ein vollständiger oder wenigstens teilweiser Flüssigkeitswechsel durchgeführt werden, d.h. die Geschirrspülmaschine GS wird mittels der Laugenpumpe LP und der Entsorgungsleitung EL entleert und durch eine zu einem hausseitigen Versorgungssystem eine Verbindung herstellende Versorgungsleitung (nicht dargestellt) wieder neu befüllt.

Bei dem Spülprogrammablauf gemäß Figur 2 erfolgt nur in dem Programmschritt Reinigen R eine Erwärmung von Flüssigkeit. Dabei wird ausgehend von einer Starttemperatur T0 zuerst während einer ersten Phase P1 die mit der Umwälzpumpe UP umgewälzte Flüssigkeit durch die Luftheizung HZ in dem Sorptionsbehälter SB auf eine maximale Temperatur T1 erwärmt, wobei zugleich der Lüfter LT eine durch den Innenraum IR der Geschirrspülmaschine GS zirkulierende Luftströmung erzeugt. Durch die Luftheizung HZ wird das Trocknungsmaterial ZEO in den Sorptionsbehälter SB auf Temperaturen erhitzt, bei denen die in dem Trocknungsmaterial ZEO gespeicherte Wassermenge aus dem Trocknungsmaterial ZEO ausgetrieben und durch die Ausblasöffnung AU in den Innenraum IR Geschirrspülmaschine GS gefördert wird. Durch die Wirkung der Luftheizung HZ ist diese Flüssigkeitsmenge aufgeheizt und bewirkt somit durch die Vermischung der bereits mit der Umwälzpumpe UP umgewälzten Flüssigkeit eine Erwärmung der Gesamtflüssigkeitsmenge im Innenraum IR Geschirrspülmaschine GS. Dadurch, dass mittels der Luftheizung HZ während des Programmschritts Reinigen R eine Aufheizung bis auf die erste Temperatur T1 erfolgt, ist sichergestellt, dass das Trockenmaterial ZEO durch die Umwälzung von verhältnismäßig kalter und trockener Luft aus dem Innenraum IR Geschirrspülmaschine GS zuverlässig und vollständig desorbiert werden kann. Anstelle eines starren Spülprogrammablaufs, bei dem bei einem ersten Programmabschnitt, bei dem eine Erwärmung von Flüssigkeit erfolgt, ein Desorptionsvorgang durchgeführt wird, kann es auch in einem alternativen Ausführungsbeispiel vorgesehen sein, Parameter, die den Desorptionsvorgang beeinflussen, zur Bestimmung des Zeitpunktes zur Durchführung der Desorption auszuwerten. Hierbei kann es sich um die Lufttemperatur und die Wasserzulauftemperatur handeln. Beispielsweise kann ein Desorptionsvorgang in einem Programmschritt Reinigen oder Klarspülen oder auch, wenn dies zweckmäßig ist, während des Programmschritts Vorspülen erfolgen.

Während des Desorbierens mittels der Luftheizung HZ wird die Ausblasöffnung AU in dem Innenraum IR Geschirrspülmaschine GS gekühlt, um so sicherzustellen, dass es auf Grund der Heizleistung der Luftheizung HZ zu keiner übermäßigen Erwärmung der Ausblasöffnung HZ mit Überhitzungsschäden kommt.

Hierzu wird während des Betriebs der Luftheizung HZ, d.h. z.B. während der Phase P1, die Umwälzpumpe UP betrieben, so dass durch die Umwälzpumpe Flüssigkeit von dem Pumpensumpf PS durch die Zuführleitung zu dem Sprüharm SA gefördert wird. Hierdurch werden die Sprüharme SA in Rotation versetzt und bewirken durch Besprühen der Ausblasöffnung AU, insbesondere einer die Ausblasöffnung AU abdeckenden Kappe, mit Flüssigkeit eine Kühlung derselben.

In einer nächsten Phase P2 des Programmschritts Reinigen R wird mittels der Wasserheizung WZ die Flüssigkeitsmenge ausgehend von der ersten Temperatur T1 auf die zweite Temperatur T2 aufgeheizt.

Um die Reinigungswirkung während des Programmschritts Reinigen R zu erhöhen, ist vorgesehen, durch Erhöhung der Drehzahl der Umwälzpumpe UP den Sprühdruck der aus dem Sprüharm SA austretenden Wasserstrahlen zu steigern. Hierzu wird während des Programmschritts Reinigen R während der Nachwaschphase NA die mittels der Umwälzpumpe UP umgewälzte Flüssigkeitsmenge durch einen Nachfüllschritt erhöht, bspw. zum Zeitpunkt t1 (vgl. Figur 2), und anschließend die Drehzahl der Umwälzpumpe UP erhöht, z.B. kontinuierlich, bis die Umwälzpumpe wieder unter Rundlaufbedingung läuft, d.h. während des Betriebs keine Luftblasen ansaugt, was die Förderleistung der Umwälzpumpe UP reduziert und zu einer unerwünschten Geräuschentwicklung führt. Hierdurch wird es möglich, die während des Desorbierens freigesetzte Flüssigkeitsmenge, die im Trocknungsmaterial ZEO gespeichert war, bei der Bemessung der nachzufüllenden Flüssigkeitsmenge zu berücksichtigen und somit den Gesamtwasserbedarf bei verbesserter Reinigungsleistung zu reduzieren.

Zwischen dem Programmschritt Klarspülen K und dem Programmschritt Trocknen T ist eine Abtropfphase AB vorgesehen (vgl. Figur 2), während der am gereinigten Spülgut anhaftende Flüssigkeit, d.h. mit Klarspüler versetztes Wasser, schwerkraftbedingt von dem Spülgut ablaufen kann und sich in dem Pumpensumpf PS des Innenraums IR der Geschirrspülmaschine GS sammeln kann. Hierdurch wird die von dem Sorptionstrocknungssystem aufzunehmende Flüssigkeitsmenge reduziert und damit die Dauer des Programmschritts Trocknen T.

Vor dieser Abtropfphase AB, d.h. am Ende des Programmschritts Klarspülen K, erfolgt ein Abpumpvorgang, bei dem die mit Klarspüler versetzte Flüssigkeit mittels der Laugenpumpe LP durch die Entleerungsleitung EL in ein hausseitiges Abwasserentsorgungssystem gefördert wird. Es folgt die Abtropfphase AB, während der weder die Umwälzpumpe UP noch die Laugenpumpe LP sowie auch nicht der Lüfter LT oder eine der genannten Heizungen HZ, WZ in Betrieb sind. Nach Ablauf dieser Abtropfphase AB beginnt der Programmschritt Trocknen T durch Inbetriebnahme des Lüfters LT, so dass eine durch den Innenraum IR der Geschirrspülmaschine und dem Sorptionsbehälter SB zirkulierende Luftströmung erzeugt wird, um das gereinigte Spülgut in den Geschirrkörben GK zu trocknen. Am Ende des Programmschritts Trocknen T erfolgt ein weiterer Abpumpvorgang mittels der Laugenpumpe LP, mittels dem eine verbleibende Flüssigkeitsmenge aus der Geschirrspülmaschine GS durch die Entleerungsleitung EL in ein hausseitiges Abwasserentsorgungssystem gefördert wird. Alternativ hierzu kann auch vorgesehen sein, einen weiteren Abpumpvorgang zusätzlich oder alternativ zu Beginn des Programmschritts Trocknen T durchzuführen.

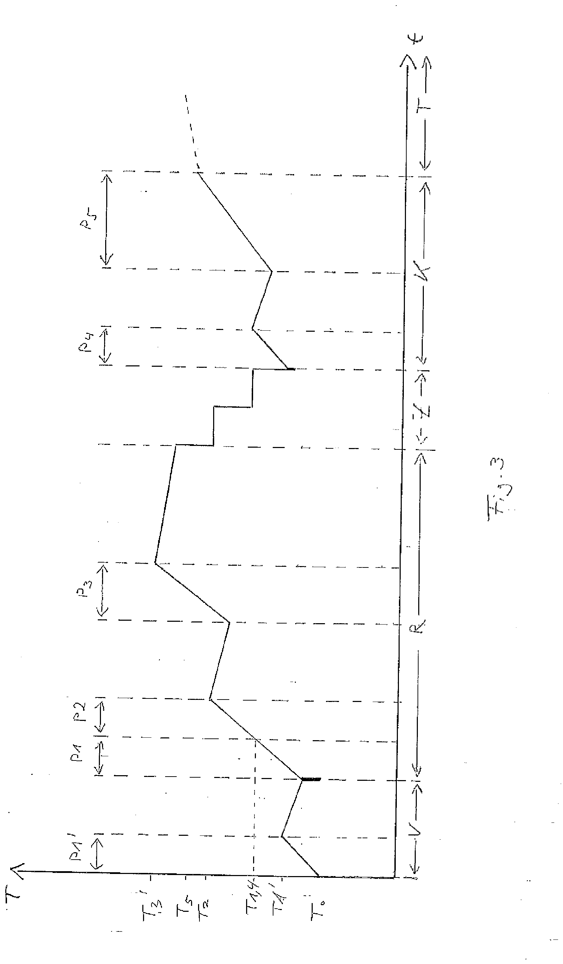

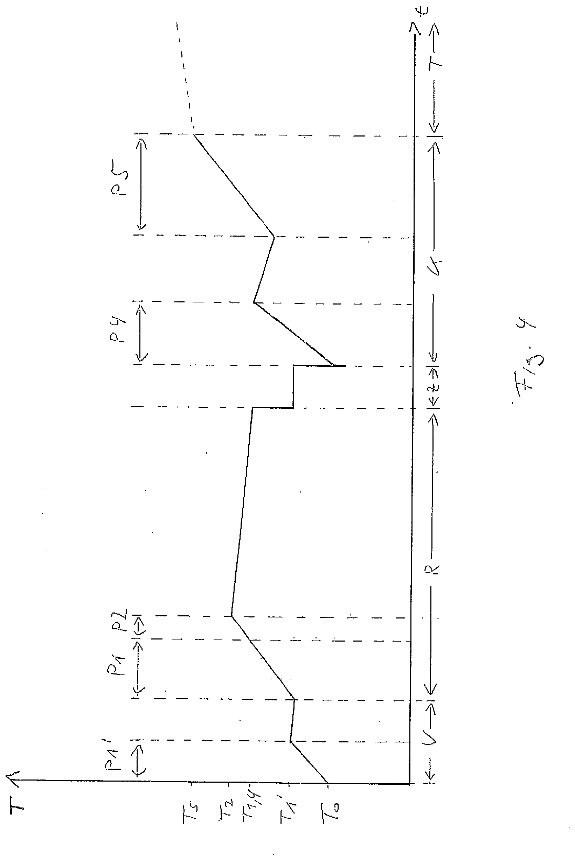

Bei dem Spülprogramm gemäß Figur 3 und 4 erfolgt eine Erwärmung von Flüssigkeit im ersten der Programmschritte, dem Programmschritt Vorspülen V. Hierzu wird mittels der Luftheizung HZ Flüssigkeit ausgehend von einer Starttemperatur T0 während einer Phase P1' auf eine Temperatur T1' erwärmt, in dem wie oben beschrieben mittels des Lüfters LT eine durch den Innenraum IR der Geschirrspülmaschine GS und den Sorptionsbehälter SB zirkulierende Luftströmung erzeugt wird. Nach Erreichen der Temperatur T1' wird die Luftheizung HZ deaktiviert. Zu diesem Zeitpunkt ist das Trocknungsmaterial ZEO noch nicht vollständig desorbiert ist, d.h. in dem Trocknungsmaterial ZEO ist eine Restwassermenge gespeichert. Um diese Restwassermenge aus dem Trocknungsmaterial ZEO auszutreiben und somit ein wieder voll wasseraufnahmefähiges Trocknungsmaterial ZEO zu Beginn des Programmschritts Trocknen T zur Verfügung zu haben, wird im nachfolgenden Programmschritt Reinigen R zuerst die Flüssigkeit mittels der Luftheizung HZ auf eine Temperatur T1 und anschließend durch Betrieb der Wasserheizung auf die Temperatur T2 aufgeheizt. Das heißt, die Desorptionsphase des Trocknungsmittels ZEO im Sorptionsbehälter SB ist in diesem Ausführungsbeispiel zweigeteilt und verteilt sich auf zwei Programmschritte, nämlich den Programmschritt Vorspülen V und den Programmschritt Reinigen R.

Um die Reinigungswirkung durch eine weitere Erhöhung der Temperatur zu steigern, kann eine weitere Phase P3 (vgl. Figur 3) vorgesehen sein, während der mit der Wasserheizung WZ eine weitere Erwärmung der Flüssigkeit auf eine Temperatur T3 erfolgt.

Um das Trocknungsergebnis am Ende des Programmschritts Trocknen T zu verbessern, ist bei den Ausführungsbeispielen gemäß den Figuren 3 und 4 vorgesehen, dass während des Klarspülschritts K eine Erwärmung der Flüssigkeit erfolgt. Hierzu wird während einer Phase P4 mittels der Wasserheizung WZ Flüssigkeit, bei der es sich um Wasser oder um mit Klarspüler versetztes Wasser handelt, auf eine Temperatur T4 aufgeheizt. Alternativ kann hierzu anstelle der Wasserheizung auch die Luftheizung HZ verwendet werden, um z.B. eine bisher im Programmverlauf nicht vollständig erfolgte Desorption zu vollenden. Zusätzlich kann während einer weiteren Phase P5 eine weitere Erwärmung der Flüssigkeit auf eine Temperatur T5 erfolgen, um die Trocknung mit der Sorptionstrocknungssystem zu verbessern.

### Bezugszeichenliste

- AB: Abtropfphase
- AU: Ausblasöffnung
- BO: Bodenbaugruppe
- EI: Einlass
- EL: Entsorgungsleitung
- GK: Geschirrkorb
- GS: Geschirrspülmaschine
- HZ: Luftheizung
- IR: Innenraum
- LK: Luftkanal
- LP: Laugenpumpe
- LT: Lüfter
- NA: Nachwaschphase
- P1': Phase 1'
- P1: Phase 1
- P2: Phase 2
- P3: Phase 3
- P4: Phase 4
- P5: Phase 5
- PS: Pumpensumpf
- SA: Sprüharm
- SB: Sorptionsbehälter
- t1: Nachfüllzeitpunkt
- T0: Starttemperatur
- T1': Temperatur
- T1: Temperatur
- T2: Temperatur
- T3: Temperatur
- T4: Temperatur
- T5: Temperatur
- UP: Umwälzpumpe
- WZ: Wasserheizung
- ZEO: Trocknungsmaterial
- ZL: Zuführleitung

## Patentansprüche

1. Verfahren zum Betreiben einer Geschirrspülmaschine (GS), insbesondere einer Haushalts-Geschirrspülmaschine, bei dem wenigstens in einem Innenraum (IR) gelagertes Spülgut wenigstens zeitweise mit erwärmter Flüssigkeit beaufschlagt wird, wobei zum Erwärmen der Flüssigkeit Luft zuerst durch ein für exothermisches Trocknen geeignetes Trocknungsmaterial (ZEO) und dann die Luft mit der aus dem Trocknungsmaterial (ZEO) ausgetriebenen, erwärmten Flüssigkeit durch eine Ausblasöffnung (AU), durch die Luft mit der aus dem Trocknungsmaterial (ZEO) ausgetriebenen Flüssigkeit in den Innenraum (IR) eintritt, geleitet wird, wobei die Ausblasöffnung (AU) gekühlt wird, und wobei ein Kühlmittel mittels einer Umwälzpumpe (UP) zum Beaufschlagen von Spülgut mit Flüssigkeit umgewälzt wird, **dadurch gekennzeichnet, dass** die Umwälzpumpe (UP) mit einer geringeren Drehzahl betrieben wird, wenn die Ausblasöffnung (AU) gekühlt wird, als wenn Spülgut mit Flüssigkeit beaufschlagt wird.

2. Verfahren nach Anspruch 1, **dadurch gekennzeichnet, dass** zur Kühlung die Ausblasöffnung (AU) mit einem Kühlmittel, insbesondere mit einem Wasser enthaltenden Kühlmittel, benetzt wird.

3. Verfahren nach Anspruch 1 oder 2, **dadurch gekennzeichnet, dass** das Kühlmittel in einem geschlossenen Kreislauf umgewälzt wird.

4. Verfahren nach wenigstens einem der Ansprüche 1 bis 3, **dadurch gekennzeichnet, dass** Luft aus dem Innenraum (IR) in einem geschlossenen Kreislauf durch das Trocknungsmaterial (ZEO) und wieder zurück durch die Ausblasöffnung (AU) in den Innenraum (IR) geleitet wird.

5. Verfahren nach wenigstens einem der Ansprüche 1 bis 3, **dadurch gekennzeichnet, dass** das Trocknungsmaterial (ZEO) zwangsdurchströmt wird.

6. Verfahren nach Anspruch 5, **dadurch gekennzeichnet, dass** mittels eines Lüfters (LT) die Zwangsdurchströmung bewirkt wird.

7. Verfahren nach wenigstens einem der Ansprüche 1 bis 6, **dadurch gekennzeichnet, dass** ein reversibel dehydrierbares Trocknungsmaterial (ZEO), insbesondere Zeolith, verwendet wird.

8. Geschirrspülmaschine (GS), insbesondere Haushalts-Geschirrspülmaschine, wenigstens aufweisend Mittel zum wenigstens zeitweisen Beaufschlagen von in einem Innenraum (IR) der Geschirrspülmaschine (GS) gelagertem Spülgut mit erwärmter Flüssigkeit, wobei zum Erwärmen der Flüssigkeit ein für exothermisches Trocknen geeignetes Trocknungsmaterial (ZEO) vorgesehen ist, durch das Luft hindurchleitbar und dann die Luft mit aus dem Trocknungsmaterial (ZEO) ausgetriebener, erwärmter Flüssigkeit durch eine Ausblasöffnung (AU), durch die Luft mit der aus dem Trocknungsmaterial (ZEO) ausgetriebenen Flüssigkeit in den Innenraum (IR) eintritt, leitbar ist, wobei die Ausblasöffnung (AU) kühlbar ist, wenn die Luft mit der aus dem Trocknungsmaterial (ZEO) ausgetriebenen Flüssigkeit in den Innenraum (IR) eintritt, wobei eine Umwälzpumpe (UP) zum Beaufschlagen von Spülgut mit Flüssigkeit vorgesehen ist, mit der das Kühlmittel umwälzbar ist, **dadurch gekennzeichnet, dass** die Umwälzpumpe (UP) mit einer geringeren Drehzahl betreibbar ist, wenn die Ausblasöffnung (AU) gekühlt wird, als wenn Spülgut mit Flüssigkeit beaufschlagt wird.

9. Geschirrspülmaschine (GS) nach Anspruch 8, **dadurch gekennzeichnet, dass** die Ausblasöffnung (AU) zur Kühlung mit einem Kühlmittel, insbesondere mit einem Wasser enthaltenden Kühlmittel, benetzbar ist.

10. Geschirrspülmaschine (GS) nach Anspruch 8 oder 9, **dadurch gekennzeichnet, dass** ein geschlossener Kreislauf vorgesehen ist, in dem das Kühlmittel umgewälzt wird.

11. Geschirrspülmaschine (GS) nach wenigstens einem der Ansprüche 8 bis 10, **dadurch gekennzeichnet, dass** ein geschlossenen Kreislauf vorgesehen ist, in dem Luft aus dem Innenraum (IR) durch das Trocknungsmaterial (ZEO) und wieder zurück durch die Ausblasöffnung (AU) in den Innenraum (IR) leitbar ist.

12. Geschirrspülmaschine (GS) nach wenigstens einem der Ansprüche 8 bis 11, **dadurch gekennzeichnet, dass** Mittel zur Zwangsbeströmung des Trocknungsmaterials (ZEO) vorgesehen sind.

13. Geschirrspülmaschine (GS) nach Anspruch 12, **dadurch gekennzeichnet, dass** die Mittel zur Zwangsdurchströmung des Trocknungsmaterials (ZEO) einen Lüfter (LT) umfassen.

14. Geschirrspülmaschine (GS) nach wenigstens einem der Ansprüche 8 bis 13, **dadurch gekennzeichnet, dass** das Trocknungsmaterial ein reversibel dehydrierbares Trocknungsmaterial (ZEO), insbesondere Zeolith, ist.

## Claims

1. Method for operating a dishwasher (GS), in particular a household dishwasher, wherein at least items to be washed supported in an interior (IR) are subjected at least periodically to the action of heated fluid, wherein to heat the fluid air is first conducted through a drying material (ZEO) suitable for exothermic drying and then the air together with the heated fluid driven out of the drying material (ZEO) is conducted through an outlet opening (AU), through which air together with the fluid driven out of the drying material (ZEO) enters the interior (IR), wherein the outlet opening (AU) is cooled, wherein the cooling agent is circulated by means of a circulation pump (UP) to apply fluid to items to be washed, **characterised in that** the circulation pump (UP) is operated at a lower speed when the outlet opening (AU) is cooled than when fluid is applied to the items to be washed.

2. Method according to claim 1, **characterised in that** the outlet opening (AU) is wet with a cooling agent, in particular with a cooling agent containing water, for cooling purposes.

3. Method according to claim 1 or 2, **characterised in that** the cooling agent is circulated in a closed circuit.

4. Method according to at least one of claims 1 to 3, **characterised in that** air from the interior (IR) is conducted in a closed circuit through the drying material (ZEO) and back through the outlet opening (AU) into the interior (IR).

5. Method according to at least one of claims 1 to 3, **characterised in that** there is a forced throughflow through the drying material (ZEO).

6. Method according to claim 5, **characterised in that** the forced throughflow is brought about by means of a fan (LT).

7. Method according to at least one of claims 1 to 6, **characterised in that** a reversibly dehydratable drying material (ZEO), in particular zeolite, is used.

8. Dishwasher (GS), in particular a household dishwasher, at least featuring means for subjecting items to be washed supported in an interior (IR) of the dishwasher (GS) at least periodically to the action of heated fluid, wherein a drying material (ZEO) suitable for exothermic drying is provided to heat the fluid, through which drying material (ZEO) air can be conducted and then the air together with heated fluid driven out of the drying material (ZEO) can be conducted through an outlet opening (AU), through which air together with the fluid driven out of the drying material (ZEO) enters the interior (IR), wherein the outlet opening (AU) can be cooled when the air together with the fluid driven out of the drying material (ZEO) enters the interior (IR), wherein a circulation pump (UP) is provided to apply fluid to the items being washed, said circulation pump (UP) being able to be used to circulate the cooling agent, **characterised in that** the circulation pump (UP) can be operated at a lower speed when the outlet opening (AU) is cooled than when fluid is applied to the items to be washed.

9. Dishwasher (GS) according to claim 8, **characterised in that** the outlet opening (AU) can be wet with a cooling agent, in particular with a cooling agent containing water, for cooling purposes.

10. Dishwasher (GS) according to claim 8 or 9, **characterised in that** a closed circuit is provided, in which the cooling agent is circulated.

11. Dishwasher (GS) according to at least one of claims 8 to 10, **characterised in that** a closed circuit is provided, in which air from the interior (IR) is conducted through the drying material (ZEO) and back through the outlet opening (AU) into the interior (IR).

12. Dishwasher (GS) according to at least one of claims 8 to 11, **characterised in that** means are provided to force a throughflow through the drying material (ZEO).

13. Dishwasher (GS) according to claim 12, **characterised in that** the means for forcing a throughflow through the drying material (ZEO) comprises a fan (LT).

14. Dishwasher (GS) according to at least one of claims 8 to 13, **characterised in that** the drying material is a reversibly dehydratable drying material (ZEO), in particular zeolite.

## Revendications

1. Procédé d'utilisation d'un lave-vaisselle (GS), en particulier d'un lave-vaisselle domestique, dans lequel au moins de la vaisselle à laver stockée dans un espace intérieur (IR) est soumise au moins temporairement à un fluide chauffé, dans lequel, afin de chauffer le fluide, de l'air est d'abord guidé à travers un matériau de séchage (ZEO) approprié pour un séchage exothermique et l'air est ensuite guidé avec le fluide chauffé expulsé du matériau de séchage (ZEO) à travers une ouverture de purge (AU) à travers laquelle de l'air avec le fluide expulsé du matériau de séchage (ZEO) entre dans l'espace intérieur (IR), dans lequel l'ouverture de purge (AU) est refroidie, et dans lequel un réfrigérant est recyclé au moyen d'une pompe de recyclage (UP) afin de soumettre de la vaisselle à laver à du fluide, **caractérisé en ce que** la pompe de recyclage (UP) est utilisée avec un régime moteur plus faible lorsque l'ouverture de purge (AU) est refroidie que lorsque de la vaisselle à laver est soumise à du fluide.

2. Procédé selon la revendication 1, **caractérisé en ce que**, en vue du refroidissement, l'ouverture de purge (AU) est mouillée avec un réfrigérant, en particulier avec un réfrigérant contenant de l'eau.

3. Procédé selon la revendication 1 ou 2, **caractérisé en ce que** le réfrigérant est recyclé en circuit fermé.

4. Procédé selon l'une quelconque des revendications 1 à 3, **caractérisé en ce que** de l'air issu de l'espace intérieur (IR) est guidé en circuit fermé à travers le matériau de séchage (ZEO) avec retour dans l'espace intérieur (IR) par l'ouverture de purge (AU).

5. Procédé selon l'une quelconque des revendications 1 à 3, **caractérisé en ce que** la circulation à travers le matériau de séchage (ZEO) est forcée.

6. Procédé selon la revendication 5, **caractérisé en ce que** la circulation forcée est provoquée au moyen d'un ventilateur (LT).

7. Procédé selon l'une quelconque des revendications 1 à 6, **caractérisé en ce qu'**un matériau de séchage (ZEO) pouvant être déshydraté de manière réversible, en particulier de la zéolithe, est utilisé.

8. Lave-vaisselle (GS), en particulier lave-vaisselle domestique, présentant au moins un moyen destiné à soumettre au moins temporairement de la vaisselle à laver stockée dans un espace intérieur (IR) du lave-vaisselle (GS) à du fluide chauffé, dans lequel un matériau de séchage (ZEO), approprié pour un séchage exothermique et à travers lequel de l'air peut être guidé de manière traversante et l'air avec du fluide chauffé expulsé du matériau de séchage (ZEO) est ensuite guidé à travers une ouverture de purge (AU) à travers laquelle de l'air avec le fluide expulsé du matériau de séchage (ZEO) entre dans l'espace intérieur (IR), est prévu pour le chauffage du fluide, dans lequel l'ouverture de purge (AU) peut être refroidie lorsque l'air avec le fluide expulsé du matériau de séchage (ZEO) entre dans l'espace intérieur (IR), dans lequel une pompe de recyclage (UP), destinée à soumettre de la vaisselle à laver à du fluide et avec laquelle le réfrigérant peut être recyclé, est prévue,
**caractérisé en ce que** la pompe de recyclage (UP) peut être utilisée avec un régime moteur plus faible lorsque l'ouverture de purge (AU) est refroidie que lorsque de la vaisselle à laver est soumise à du fluide.

9. Lave-vaisselle (GS) selon la revendication 8, **caractérisé en ce que**, en vue du refroidissement, l'ouverture de purge (AU) peut être mouillée avec un réfrigérant, en particulier avec un réfrigérant contenant de l'eau.

10. Lave-vaisselle (GS) selon la revendication 8 ou 9, **caractérisé en ce qu'**un circuit fermé, au sein duquel le réfrigérant est recyclé, est prévu.

11. Lave-vaisselle (GS) selon l'une quelconque des revendications 8 à 10, **caractérisé en ce qu'**un circuit fermé, au sein duquel de l'air issu de l'espace intérieur (IR) peut être guidé à travers le matériau de séchage (ZEO) avec retour dans l'espace intérieur (IR) par l'ouverture de purge (AU), est prévu.

12. Lave-vaisselle (GS) selon l'une quelconque des revendications 8 à 11, **caractérisé en ce que** des moyens destinés à la circulation forcée à travers le matériau de séchage (ZEO) sont prévus.

13. Lave-vaisselle (GS) selon la revendication 12, **caractérisé en ce que** les moyens destinés à la circulation forcée à travers le matériau de séchage (ZEO) comprennent un ventilateur (LT).

14. Lave-vaisselle (GS) selon l'une quelconque des revendications 8 à 13, **caractérisé en ce que** le matériau de séchage est un matériau de séchage (ZEO) pouvant être déshydraté de manière réversible, en particulier de la zéolithe.
